# EUROPÄISCHE PATENTSCHRIFT

(11) **EP 0 375 685 B1**
(45) Veröffentlichungstag und Bekanntmachung des Hinweises auf die Patenterteilung: **10.03.1993**
(21) Anmeldenummer: 88904930.0
(22) Anmeldetag: 08.06.1988
(51) Int. Cl.: H01B 7/28, G02B 6/44

(54) **FÜLLSUBSTANZ ZUM LÄNGSDICHTEN ELEKTRISCHER UND/ODER OPTISCHER KABEL**
FILLER FOR LONGITUDINAL SEALING OF ELECTRICAL AND/OR OPTICAL CABLES
CHARGE POUR RENDRE ETANCHES DES CABLES ELECTRIQUES ET/OU OPTIQUES DANS LE SENS DE LA LONGUEUR

(30) Priorität: 09.06.1987 DE 3719566; 27.05.1988 DE 3818550
(43) Veröffentlichungstag der Anmeldung: 04.07.1990
(73) Patentinhaber: SIEMENS AKTIENGESELLSCHAFT, 80333 München (DE)
(72) Erfinder: POLLE, Hubert, D-8630 Coburg (DE)
(86) Internationale Anmeldenummer: DE8800362
(87) Internationale Veröffentlichungsnummer: WO8810000

(56) Entgegenhaltungen:
- DE-A- 3 150 909
- FR-A- 2 456 375

## Beschreibung

Die Erfindung bezieht sich auf eine Füllsubstanz zum Längsdichten elektrischer und/oder optischer Kabel, die aus einer Mischung einer hydrophoben pastösen Masse und mindestens einem unter Einwirkung von Wasser quellfähigen, pulverförmigen Stoff besteht, wobei der quellfähige Stoff ein synthetischer Stoff ist, dessen Volumenanteil an der Füllsubstanz kleiner als 10 % ist.

Bei einer Beschädigung des Mantels eines Kabels, insbesondere eines Nachrichtenkabels, kann es bei Einwirkung von Wasser auf die Schadenstelle zur Ausbreitung des Wassers über größere Distanzen im Kabel kommen, wodurch es zu Störungen, bei Nachrichtenkabel zu Beeinträchtigungen oder sogar zum Ausfall der Nachrichtenübertragung, kommen kann. Das ist - abgesehen von den meist relativ teuren Reparaturen - außerordentlich störend. Die Kabel sollen daher so verändert werden, daß bei Mantelbeschädigungen, die Ausbreitung von Leckwasser so gering gehalten wird, daß der Betrieb des Kabels über Jahrzehnte nicht merklich beeinflußt wird bzw. daß das Vordringen des Wassers von der Schadenstelle aus innerhalb einer Reihe von Jahre auf Muffenlänge beschränkt bleibt.

Seit etwa zwanzig Jahren werden Nachrichtenkabel gefüllt (GB-PS 987 508). Weltweit hat sich die Füllung mit Petrolat, einer Lösung von organischen Polymeren in flüssigen Kohlenwasserstoffen, durchgesetzt. Dieser Füllung haftet lediglich der Nachteil an, daß sich hierdurch die Abmessungen der Kabel gegenüber ungefüllten Kabeln erhöhen, um die vorgeschriebene Betriebskapazität einhalten zu können. Ferner haben Petrolate deutlich höhere thermische Ausdehnungskoeffizienten als die anderen Kabelbestandteile. Dadurch entsteht bei Kabeln, die bei Raumtemperatur vollständig gefüllt sind, bei Erwärmung ein Überdruck, der zum Platzen des Kabels und/oder zur schnellen Füllung der Zellen von verzellten Isolierhüllen führen kann. Unter Betriebsbedingungen sind solche Kabel oft nicht mehr vollständig gefüllt, so daß sich kleine Kanäle bilden können, längs denen sich Leckwasser ausbreiten kann. Die Wasserausbreitungsmöglichkeiten sind verstärkt vorhanden, wenn das Kabel heiß gefüllt wurde, da hier die Schrumpfung des Petrolats noch größer ist.

Der Versuch, Kabel durch Füllung mit Quellpulver längsdicht zu machen (DE-OS 17 90 202), hat sich nicht bewährt. Wird nämlich das Kabel vollständig mit Quellpulver gefüllt, so verschlechtern sich die Übertragungseigenschaften des Kabels deutlich, weil Quellpulver dielektrisch nicht hochwertig und außerdem ziemlich teuer sind. Während bei geringerer Füllung Wasser im Schadensfall ziemlich weit in das Kabel vordringt, bevor die Quellung anspricht und dem weiteren Vordringen

des Wasser Einhalt geboten wird. Man hat daher auch schon eine Mischung aus Petrolat und Quellpulver in Betracht gezogen (DE-OS 19 36 872), konnte aber auch dabei 15 Vol.% Quellpulveranteil nicht unterschreiten, wodurch die dielektrischen Eigenschaften zu sehr beeinträchtigt werden.

Durch Einbringen von gekammerter Luft in Petrolat in Form von hochkompressiblen Hohlkugeln mit elastischen Wandungen und mit kleinen Abmessungen (etwa 1 bis 200 µm) werden die dielektrischen Werte erheblich verbessert (DE-OS 19 36 872 und DE-PS 31 50 909). Eine Füllung dieser Art hat den Vorteil, daß ihre Dielektrizitätszahl nur etwa 1,5 gegenüber 2,3 bei reinem Petrolat beträgt und so die Adern und das Kabel entsprechend dünner ausgeführt werden können. Ein weiterer Vorteil ist darin zu sehen, daß die Mischung geringer schrumpft als reine Petrolate und durch ihre große Kompressibilität auch nur zu unwesentlichen Druckerhöhungen im Kabel bei Erwärmung führt. Bei sachgemäßer Füllung einer solchen Mischfüllung im Kabel zeigen die Kabel gegenüber mit Petrolat gefüllten Kabeln eine bessere Wasserdichtigkeit. Die Mischung der erwähnten Massen und das Einfüllen in das Kabels erfordert aber einen erheblichen technischen Aufwand, da, wie die Erfahrung zeigt, die Masse keine nicht in Hohlkugeln eingeschlossene Luft im merklichen Anteil enthalten sollte. Ferner muß die Füllung in der ummantelten Seele noch etwas unter Überdruck stehen. Um diesen Überdruck aufzufangen, sind auch im Kabelaufbau einige zusätzlichen Aufwand erfordernde Maßnahmen notwendig.

Ferner ist bekannt, in Kabel Suspensionen einzubringen, die aus dielektrisch hochwertigen Ölen und aus einem oder mehreren der folgenden Bestandteile bestehen:
dielektrisch hochwertige Pulver, Hohlkugeln, expandierbare Teilchen, mit Wasser quellbare Substanzen und Luftbläschen (DE-PS 30 48 912).

Schließlich ist die französische Patentschrift 2 456 375 zu nennen, in der eine Füllsubstanz beschrieben wird, die u. a. aus einer Mischung von mindestens einem organischen Bestandteil und einem hydrophilen Stoff mit einem Gewichtsanteil zwischen 5 und 35 % der Mischung besteht. Aus dieser Druckschrift ist auch bereits bekannt, den Volumenanteil des quellfähigen Stoffes auf unter 10 % zu begrenzen.

Bei den bekannten Füllungen werden die angestrebte niedrige Dielektrizitätszahl und die niedrigen Verlustfaktoren nicht im beabsichtigten Maß erreicht.

Der Erfindung liegt daher die Aufgabe zugrunde, die Wirksamkeit der aus einer Mischung bestehenden Füllsubstanz dadurch zu verbessern, daß die vorteilhaften Eigenschaften des in der Mischung enthaltenen Quellpulvers besser zur Wirkung gebracht werden. Zur Lösung dieser Aufgabe wird gemäß der Erfindung vorgeschlagen, daß die Teilchengröße des quellfähigen Stoffes nicht größer als 50 µm ist.

Durch die Wahl der Teilchengröße des quellfähigen Stoffes, die nicht größer als 50 µm sein sollen, wird wegen einer wesentlich größeren spezifischen Oberfläche eine hohe Quellgeschwindigkeit erzielt, so daß der Volumenanteil des Quellpulvers an der Gesamtmischung zurückgenommen werden kann. Dadurch wird wiederum erreicht, daß die dielektrischen Verschlechterungen nicht ins Gewicht fallen.

Trotz mehrfacher Ansätze hat sich eine Füllung von Kabeln mit Quellpulver oder mit Gemischen, die Quellpulver enthalten, bisher nicht in der Praxis durchsetzen können. Wie durch die Erfindung gezeigt wird, müssen das Quellpulver, wie auch die anderen Bestandteile der Mischung ganz besondere Anforderungen erfüllen, die bisher nicht berücksichtigt wurden. Das Quellpulver muß ein großes und vor allen Dingen ein schnelles Quellvermögen aufweisen. Hohe Quellgeschwindigkeit wird neben der Struktur im wesentlichen durch die geringe Teilchengröße des hydrophilen Stoffes bewirkt.

Ferner ist vom Quellpulver bezüglich seines Molekularaufbaues zu fordern, daß es nicht zu viele polare Gruppen und damit eine nicht zu hohe Dielektrizitätszahl aufweist. Es muß so zu trocknen sein, daß absorbiertes Wasser praktisch vollständig ausgetrieben werden kann, ohne daß es zur Zersetzung des Materials kommt; denn schon geringe Anteile Wasser würden die Dielektrizitätszahl deutlich erhöhen.

Ein weiterer Vorteil der neuen Füllsubstanz besteht darin, daß keine besonderen Maßnahmen erforderlich sind, um die normalerweise beim Herstellen solcher Mischungen und beim Einfüllen in die Kabel in die Füllmasse hineingeratene Luft zu unterdrücken, weil fein verteilte Luftteilchen in der Umgebung der Quellpulverteilchen die Quellgeschwindigkeit beim Hinzutreten von Wasser sogar noch vergrößern.

In Ausgestaltung der Erfindung wird man den Volumenanteil des quellfähigen Stoffes an der Gesamtsubstanz auf 3 bis 7 Vol% beschränken. Ferner ist es vorteilhaft, wenn der quellfähige Stoff vernetzt ist. Vorzugsweise wird man als quellfähigen Stoff einen aus vernetzten polyacrylsauren Natriumsalzen bestehenden Stoff verwenden.

Eine weitere Verbesserung kann bewirkt werden, wenn der Füllsubstanz hochkompressible Hohlkörper aus Kunststoff mit Teilchengrößen im wesentlichen kleiner oder gleich 50 µm in einem Volumenanteil von mindestens 45 % hinzugefügt werden. Dabei ist es besonders vorteilhaft, wenn die Wandung der Hohlkörper aus einem Polyvenylidenacrylnitrilcopomymer besteht.

Beim Gegenstand der Erfindung empfiehlt es sich, von einem besonders niederviskosen Petrolat auszugehen, da die Mischung durch das das Quellpulver und auch durch das Hinzufügen der Hohlkörper relativ steif wird.

In weiterer Ausgestaltung der Erfindung wird man ein Quellpulver bevorzugen, dessen Teilchen mit einer Schutzschicht aus einem solchen Material überzogen sind, das für wachse, Öle und Fette nicht durchlässig ist, während es für Wasser durchlässig ist oder sich in Wasser auflöst. Entscheidend ist nämlich, daß die Quellpulver auch noch in den in die Kabel eingebrachten Mischungen eine genügend hohe Quellgeschwindigkeit beibehalten. Dazu ist notwendig, daß die Quellpulverteilchen auch nach inniger Vermischung mit dem pastösen Bestandteilen, wie sie bei der Herstellung und beim Füllvorgang in das Kabel erfolgt, nur geringfügig wechselwirkt. Die Quellpulverteilchen dürfen nicht vollständig oder auch nur an ihrer Oberfläche von den öligen und wachsartigen Bestandteilen der Mischung imprägniert werden.

Eine solch geringe Wechselwirkung wird durch eine Schutzschicht aus einem besonderen Material erzielt. Als geeignetes Material für eine solche Schutzschicht erweisen sich Polyalkohole oder vorzugsweise organofunktionelle Silane. Als Polyalkohole also Stoffe, die mindestens zwei alkoholische Hydroxylgruppen enthalten, kommen Glykole, Glyzerin, Sorbit, Pentaerythrit, Trimethylolpropan sowie höhermolekulare Glykole, wie Polyethylen- und Polypropylenglykol, Polyether- und Polyesterpoliole, in Frage. Als organofunktionelle Silane kommen Vinylsilane, Aminosilane, Glyzidylsilane und Methacrylsilane in Frage. Bei der Ausgestaltung der Schutzschicht wird man darauf achten, daß ihre Dicke etwa 1/50 bis 1/100 der Größe der damit zu überziehenden Teilchen nicht überschreitet.

Die Erfindung wird nachfolgend anhand eines Ausführungsbeispieles erläutert.

Zur Füllung eines Nachrichtenkabels wurde folgende Mischung einer Füllsubstanz verwendet:
Zu 7 Vol.% Quellpulver aus vernetztem polyacrylsauren Natriumsalzen (der Firma Casella) wurden 50 Vol.% hochkompressible Hohlkügelchen aus Polyvenylidenacrylnitrilcopolymer mit Teilchengrößen hinzugefügt, die im wesentlichen kleiner oder gleich 50 µm sind (Hohlkügelchen der Firma Expancel). Diese Mischung wurde ergänzt durch 43 Vol.% eines weichen Petrolats (der Firma Fuller).

Für diese Mischung ergab sich eine Dielektrizitätszahl von 1,65 und eine Dichte von 0,50 g/cm³. Auch die anderen elektrischen Werte waren befriedigend. In ein so gefülltes Kabel drang Wasser bei 1 m Wasserwäule innerhalb einiger Tage nur einige Millimeter vor. Innerhalb von Wochen kam das Vordringen des Wassers über einige Zentimeter nicht hinaus und kam danach über noch längere Zeit praktisch zum Stehen. Auch nach einer Lagerung bei Temperaturen bis 70° über etwa acht Wochen ist keine Änderung der Dichtwirkung erkennbar.

## Patentansprüche

1. Füllsubstanz zum Längsdichten elektrischer und/oder optischer Kabel, die aus einer Mischung einer hydrophoben pastösen Masse und mindestens einem unter Einwirkung von Wasser quellfähigen, pulverförmigen Stoff besteht, wobei der quellfähige Stoff ein synthetischer Stoff ist, dessen Volumenanteil an der Füllsubstanz kleiner als 10 % ist, **dadurch gekennzeichnet,** daß die Teilchengröße des quellfähigen Stoffes nicht größer als 50 µm ist.

2. Füllsubstanz nach Anspruch 1, **dadurch gekennzeichnet,** daß der Anteil des quellfähigen Stoffes an der Gesamtsubstanz 3 bis 7 Vol.% beträgt.

3. Füllsubstanz nach Anspruch 1 oder 2, **dadurch gekennzeichnet,** daß der quellfähige Stoff vernetzt ist.

4. Füllsubstanz nach Anspruch 3, **dadurch gekennzeichnet,** daß der quellfähige Stoff aus vernetzten polyacrylsauren Natriumsalzen besteht.

5. Füllsubstanz nach Anspruch 1 oder einem der folgenden, **dadurch gekennzeichnet,** daß der Füllsubstanz hochkompressible Hohlkörper aus Kunststoff mit Teilchengrößen im wesentlichen kleiner oder gleich 50 µm in einem Volumenanteil von mindestens 45 % hinzugefügt sind.

6. Füllsubstanz nach Anspruch 5, **dadurch gekennzeichnet,** daß die Hohlkörper aus einem Polyvenylidenacrylnitrilcopolymer besteht.

7. Füllsubstanz nach Anspruch 1 oder einem der folgenden, **dadurch gekennzeichnet,** daß die Teilchen des quellfähigen Stoffes mit einer Schutzschicht aus einem solchen Material überzogen sind, das für Wachse, Öle und Fette nicht durchlässig ist, während es für Wasser durchlässig ist oder sich in Wasser auflöst.

8. Füllsubstanz nach Anspruch 7, **dadurch gekennzeichnet,** daß das Material der Schutzschicht aus Polyalkoholen oder aus Silanen, vorzugsweise organofunktionellen Silanen, besteht.

9. Füllsubstanz nach Anspruch 7 und/oder 8, **dadurch gekennzeichnet,** daß die Dicke der Schutzschicht etwa 1/50 bis 1/100 der Größe der damit zu überziehenden Teilchen beträgt.

## Claims

1. Filling substance for longitudinal sealing of electric and/or optic cables which comprises a mixture of a hydrophobic pasty composition and at least one material in powder form capable of swelling under the action of water, the swellable material being a synthetic material, the proportion by volume of which in the filling substance is less than 10%, characterised in that the particle size of the swellable material is not greater than 50 µm.

2. Filling substance according to Claim 1, characterised in that the proportion of the swellable material in the substance as a whole is 3 to 7% by volume.

3. Filling substance according to Claim 1 or 2, characterised in that the swellable substance is crosslinked.

4. Filling substance according to Claim 3, characterised in that the swellable material comprises cross-linked sodium polyacrylates.

5. Filling substance according to Claim 1 or one of the following claims, characterised in that highly compressible hollow bodies of plastic having particle sizes essentially less than or equal to 50 µm are added to the filling substance in a proportion by volume of at least 45%.

6. Filling substance according to Claim 5, characterised in that the hollow bodies comprise a polyvinylideneacrylonitrile copolymer.

7. Filling substance according to Claim 1 or one of the following claims, characterised in that the particles of the swellable material are coated with a protective layer of a material which is not permeable to waxes, oils and fats, whereas it is permeable to water or dissolves in water.

8. Filling substance according to Claim 7, characterised in that the material of the protective layer comprises polyalcohols or silanes, preferably organofunctional silanes.

9. Filling substance according to Claim 7 and/or 8, characterised in that the thickness of the protective layer is approximately 1/50 to 1/100 of the size of the particles to be coated therewith.

## Revendications

1. Charge pour rendre étanche des câbles électriques et/ou optiques dans le sens de la longueur, qui consiste en un mélange d'une masse pâteuse hydrophobe et d'au moins une substance pulvérulente et susceptible de gonfler sous l'action de l'eau, la substance susceptible de gonfler étant une substance de synthèse dont la proportion en volume dans la charge est inférieure à 10 %, caractérisée en ce que la granulométrie de la substance susceptible de gonfler n'est pas supérieure à 50 µm.

2. Charge suivant la revendication 1, caractérisée en ce que la proportion de la substance susceptible de gonfler représente de 3 à 7 % en volume de la charge totale.

3. Charge suivant la revendication 1 ou 2, caractérisée en ce que la substance susceptible de gonfler est réticulée.

4. Charge suivant la revendication 3, caractérisée en ce que la substance susceptible de gonfler consiste en sels de sodium d'acides polyacryliques réticulés.

5. Charge suivant la revendication 1 ou l'une des suivantes, caractérisée en ce qu'à la charge sont ajoutés des corps creux très compressibles en matière plastique, d'une granulométrie sensiblement inférieure ou égale à 50 µm, en une proportion en volume d'au moins 45 %.

6. Charge suivant la revendication 5, caractérisée en ce que le corps creux consiste en un copolymère de polyvinylidène et d'acrylonitrile.

7. Charge suivant la revendication 1 ou l'une des suivantes, caractérisée en ce que les particules de la substance susceptible de gonfler sont enrobées d'une couche de protection en une matière qui n'est pas perméable à des cires, aux huiles et aux graisses, mais qui est perméable à l'eau ou qui se dissout dans l'eau.

8. Charge suivant la revendication 7, caractérisée en ce que la matière de la couche de protection consiste en polyalcools ou en silanes, de préférence en silanes organofonctionnels.

9. Charge suivant la revendication 7 et/ou 8, caractérisée en ce que l'épaisseur de la couche de protection représente de 1/50-ème à 1/100-ème environ de la dimension des particules à enrober ainsi.
